# EUROPEAN PATENT APPLICATION

(11) **EP 0 899 674 A2**
(43) Date of publication of application: **03.03.1999**
(21) Application number: 98306972.5
(22) Date of filing: 01.09.1998
(51) Int. Cl.: G06F 17/60

(54) **Electronic mall system**

(30) Priority: 01.09.1997 JP 236084/97
(71) Applicant: HITACHI, LTD., Chiyoda-ku, Tokyo (JP)
(72) Inventor: Mizote, Yuuji, Aiba-ku, Yokohama-shi (JP); Masuishi, Tetsuya, Machida-shi (JP); Koike, Hiroshi, Sagamihra-shi (JP); Sudo, Mitsuo, Edogawa-ku, Tokyo (JP)
(74) Representative: Calderbank, Thomas Roger

(57) **Abstract**

An electronic mall system wherein a server equipped with an electronic mall (10) is connected to a server equipped with external electronic stores (30) through a network (40, 60). When a request for information on products is received from a client (20), product information acquisition processing (12) in the electronic mall (10) requests an electronic store (30), if the request is directed to information on products related to the electronic store (30), to acquire information on products, and records the history related to the external store (30) in an external store product introduction history DB (26). When a request for purchase of a product is received from the client (20), inventory processing (14) requests the electronic store (30), if the request is to purchase a product related to the electronic store (30), to execute a transaction associated with product purchase processing. When acknowledgement of conformation on the purchase of the product is received from the client (20), the history related to the external store (30) is recorded in an external store purchase details history DB (25) if the purchased product is dealt in by the electronic store (30).

## Description

The present invention relates generally to an electronic mall server which provides clients with services for products, and more particularly, to an electronic mall system which is adapted to allow clients to utilize external electronic stores through the electronic mall server.

An electronic mall realizes functions of a mall on a computer, and specifically accommodates a plurality of electronic stores, each of which provides information on a plurality of products. The electronic mall receives a request from a user through a network and responsively provides the user with information on a desired product. Then, upon receiving a request for purchase of a product from the user, the electronic mall executes a transaction associated with the purchase of the product. Such an electronic mall is described, for example, in an article entitled "Evolution in Cyber Mall (Electronic Shopping Center)" in February 1997 issue of Nikkei Multimedia.

It is preferable for the user utilizing an electronic mall that the user is allowed to utilize not only electronic stores accommodated in the electronic mall but also external electronic stores because the user may be provided with an increased amount of information on products. Also, for external electronic stores, it is preferable that they are presented through some well known electronic mall because they will have more opportunities to be accessed. While it has been conventionally possible to access a server equipped with external electronic stores through a server equipped with an electronic mall, subsequent commercial transactions have been made directly between the user and an accessed external electronic store. This is not particularly advantageous for an electronic mall administrator. Also, as a larger number of electronic stores are accommodated in an electronic mall, the scale of the electronic mall is increased, thus causing a problem of increasing a load on a local database in an electronic mall server.

The present invention improves the electronic mall system mentioned above. Specifically, the improvements involve distributing, on a network, electronic store or stores responsible for managing product information and an electronic mall server responsible for displaying product catalogs and for proceeding with transactions associated with purchase of products, wherein the electronic mall system, however, appears as a single virtual electronic mall to consumers. It is therefore an object of the present invention to provide an electronic mall system which is capable of satisfying either of consumers acting as clients, an administrator of an electronic mall, and administrators of external electronic stores. In addition, the present invention is intended to alleviate a load on the electronic mall server caused by introducing external electronic stores into the electronic mall system.

In an electronic mall system wherein a server equipped with an electronic mall is connected to a second server equipped with external electronic store(s) through a network, the electronic mall server may have means responsive to a request for information on products received from a terminal apparatus serving as a client to request the second server to acquire information on products, if the request is directed to information on products related to an external electronic store, and means responsive to a request for purchase of a product from the terminal apparatus to request the second server to execute a transaction associated with product purchase processing, if the request is directed to purchase of a product related to an external electronic store.

The second server may have a means responsive to a request for information on products from the electronic mall server to search a product information database to acquire information on desired products and to transmit the acquired information to the electronic mall server, and means responsive to a request for executing a transaction for product purchase processing from the electronic mall server to search a product inventory information database and to check the inventory for the ordered product.

### In the drawings

Fig. 1A is a block diagram illustrating the configuration of an electronic mall system according to the present invention;
Figs. 1B and 1C are a block diagram illustrating the internal configuration of an electronic mall 10 and an electronic store 30;
Fig. 2 is a table showing a data structure for a store information database 21;
Fig. 3 is a table showing a data structure for product information databases 22, 41;
Fig. 4 is a table showing a data structure for inventory information databases 23, 42;
Fig. 5 is a table showing a data structure for a purchase details database 24;
Fig. 6 is a table showing a data structure for an external store purchase details history database 25;
Fig. 7 is a table showing a data structure for an external store product introduction history database 26;
Figs. 8A, 8B, 8C show a URL (Uniform Resource Locator) format 801;
Fig. 9 is a flow diagram for explaining how a display transitions on the screen of a client 20;
Fig. 10 is a flow chart illustrating the flow of product information acquisition processing 12, page generation processing 13, and product information search processing 31;
Fig. 11 is a flow chart illustrating the flow of inventory processing 14 and inventory processing 32; and
Fig. 12 is a flow chart illustrating the flow of product purchase fixation processing 15.

One embodiment of the present invention will hereinafter be described with reference to the accompanying drawings.

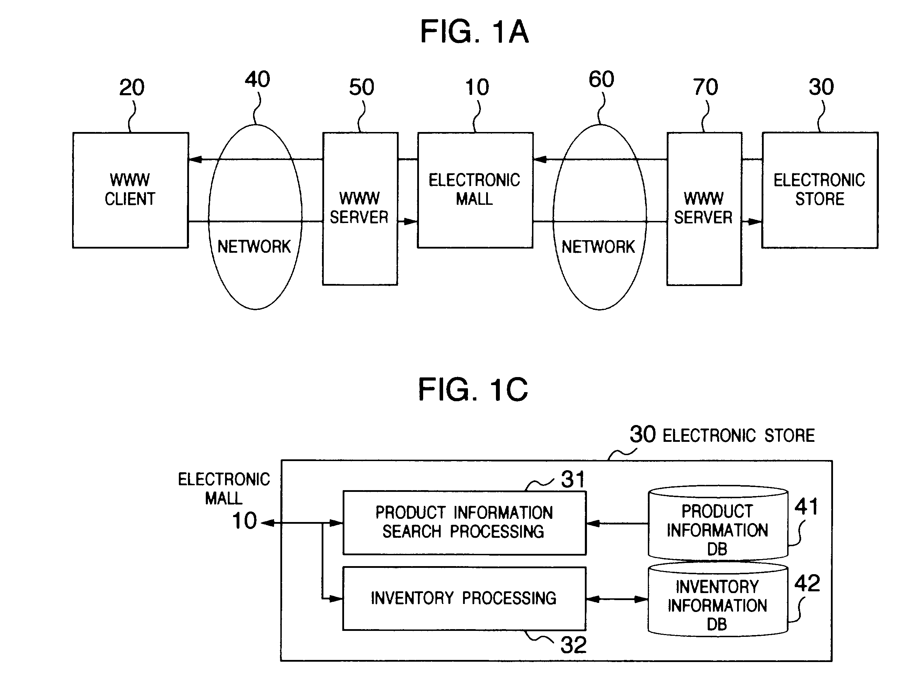

Fig. 1A illustrates the configuration of an electronic mall system. The term mall refers to a shopping center which has a plurality of stores and provides consumers with services associated with the purchase of products including presentation of product catalogs and so on. The electronic mall 10 realizes functions of a mall on a computer. A consumer, i.e., a user also utilizes the functions of the electronic mall 10 using a computer through a network. Such a system is referred to as an "electronic mall system." In the electronic mall system hereinafter described, assume that a network used to access the electronic mall system therethrough is the Internet, by way of example.

A computer used by the user is referred to as a WWW (World Wide Web) client 20 which includes a WWW browser. The WWW client 20 can be connected to the electronic mall 10 through a network 40 and a WWW server 50. The electronic mall 10 manages a plurality of electronic stores. The term store herein refers to a management unit of product information provided by a mall and forms a collection of a plurality of product information items. The WWW server 50, which is a server located at a stage previous to the electronic mall 10, is implemented by an information processing apparatus which interprets HTTP (Hyper Text Transfer Protocol) and calls the electronic mall 10. The electronic mall 10 is connected to a plurality of electronic stores 30 through a network 60 and a WWW server 70. The electronic store 30 is an information processing apparatus which manages a plurality of information items on products associated therewith. The electronic store or stores 30 may be implemented by a single or a plurality of information processing apparatus. The WWW server 70 is an information processing apparatus, acting as a server located at a stage previous to the electronic store 30, that interprets the HTTP protocol and calls the electronic store 30. In the following, a store whose product information is contained in the electronic mall 10 is referred to as an "internal store," and a store whose product information is contained in an elctronic store 30 is referred to as an "external store." The network 60 is the Internet identical to the network 40. The WWW server 50 is connected to the electronic mall 10 through LAN (Local Area Network) or the like, while the WWW server 70 is also connected to the electronic store 30 through similar LAN or the like. A plurality of the electronic stores 30 may be connected to a single electronic mall 10. Also, a plurality of the electronic malls 10 may be connected to a single WWW server 50, while a plurality of the electronic stores 30 may be connected to a single WWW server 70.

In addition, the WWW server 50 and the electronic mall 10 or the WWW server 70 and the electronic store 30 may be implemented on the same computer.

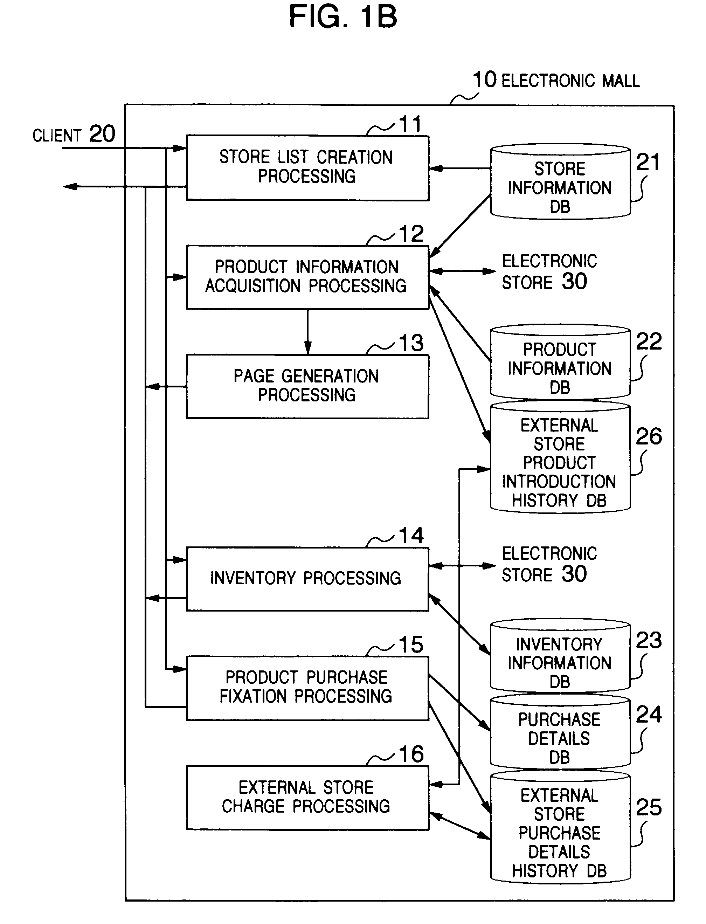

Fig. 1B illustrates the internal configuration of the electronic mall 10. A store information database (DB) 21 stores information on all stores included in the electronic mall system. A product information DB 22 stores information on products belonging to internal stores. An inventory information DB 23 stores inventory information on products, the information of which is stored in the product information DB 22. A purchase details DB 24 stores information on products purchased by consumers in internal stores and external stores. An external store purchase details history DB 25 stores information on products purchased in external stores. An external store product introduction history DB 26 records the fact that the electronic mall 10 introduces a product dealt in by an external store each time such an opportunity is given. The databases 21 through 26 are stored in a storage device in the electronic mall 10.

Blocks 11 through 16 in the electronic mall 10 represent functional modules constituting application programs (AP) executed by a CPU of the electronic mall 10. A store list creation processing module 11 is initiated when the client 20 first accesses the electronic mall 10 to create a list of stores with reference to the store information DB 21 and to transmit the list to the client 20. A product information acquisition processing module 12 is initiated when a client 20 requests information on a product in a store to search the product information DB 22 and retrieve the requested product information therefrom, if the product is dealt in by an internal store. Then, a page generation processing module 13 creates a product catalog based on the retrieved information, and transmits the created product catalog to the client 20. On the other hand, if the product is dealt in by an external store, the product information acquisition processing module 12 issues a request to the electronic store 30 for searching for information on the product. Then, the page generation processing module 13 creates a product catalog from the acquired product information, and transmits the created product catalog to the client 20. Each time the product information acquisition processing module 12 introduces products dealt in by an external store, it records the history of the introduction in the external store product introduction history DB 26. An inventory processing module 14 is initiated when a product order message is received from the client 20 to search the inventory information DB 23 and to check the inventory of the product, if the order message is directed to an internal store. If the product is now in stock, the inventory processing module 14 transmits a page for confirming the purchase of the product to the client 20. On the other hand, if the order message is directed to an external store, the product information acquisition processing module 12 issues an inventory processing request to the electronic store 30 to request a transaction associated with the purchase of the product. If the product is now in stock, the inventory processing module 14 transmits a page for confirming the purchase of the product to the client 20. A product purchase fixation processing module 15 is initiated when it receives a message from the client 20 indicating that the purchase of the product has been confirmed, to record details on the purchase of the product in the purchase details DB 24. If the client 20 has purchased a product in an external store, the store ID is recorded also in the external store purchase details history DB 25. An external store charge processing module 16 calculates a commission for product introduction and purchase processing performed by the electronic mall 10 for the external store, with reference to the external store product introduction history DB 26 and the external store purchase details history DB 25. It should be noted that the application program having the foregoing functional modules 11 - 16 can be stored on a computer readable storage medium such that the application programs are read from the recorded medium into the computer of the electronic mall 10 for execution.

Fig. 1C illustrates the internal configuration of the electronic store 30. A product information DB 41 has product information, similar to the product information DB 22, related to the external store, while an inventory information DB 42 has inventory information, similar to the inventory information DB 23, related to the external store. Blocks representing product information search processing 31 and inventory processing 32 are functional modules constituting respective application programs executed by a CPU of the electronic store 30. The product information search processing module 31 is responsive to a product information search request from the electronic mall 10 to search the product information DB 41 and retrieve requested product information which is transmitted to the electronic mall 10. The inventory processing 32 is responsive to an inventory processing request from the electronic mall 10 to search the inventory information DB 42 for increasing or decreasing products in stock and to transmit the result to the electronic mall 10. It should be noted that the application programs having the functional modules 31, 32 can be stored on a computer readable storage medium such that the application programs are read from the recording medium into the computer of the electronic store 30 for execution.

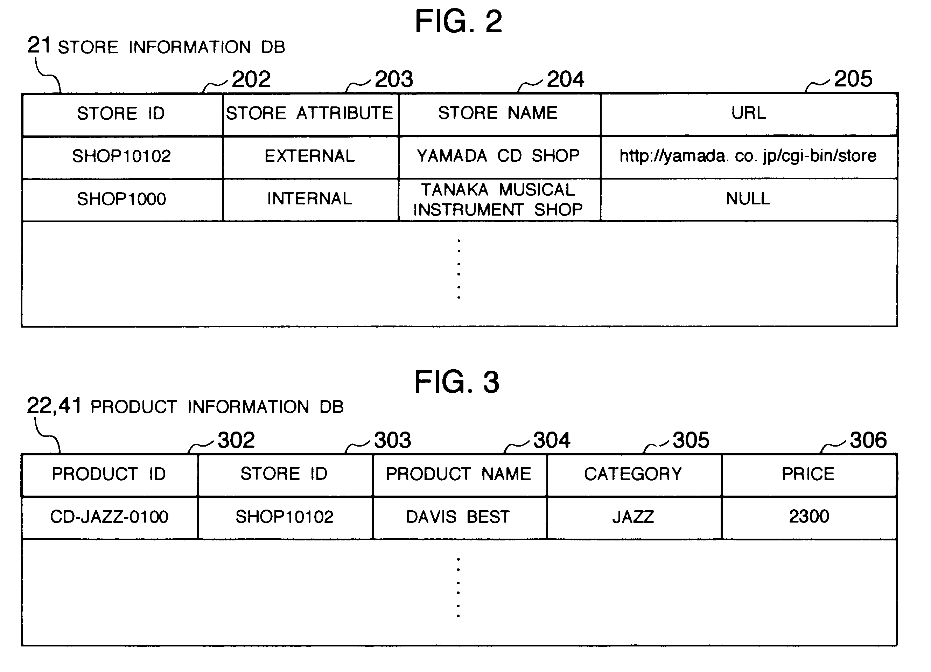

Fig. 2 shows a data structure for the store information DB 21. Each record of the store information DB 21 consists of Store ID 202, Store Attribute 203, Store Name 204, and URL (Uniform Resource Locator) 205. Store ID 202 is an identifier for uniquely identifying a store included in the electronic mall system. Store Attribute 203 is a flag for distinguishing whether the store is an "external store" or an "internal store." Store Name 204 is a character string indicative of the name of the store. URL 205 indicates the address on the network of the electronic store.

Fig. 3 shows a data structure for the product information DBs 22, 41. Each record of the product information DBs 22, 41 consists of Product ID 302, Store ID 303, Product Name 304, Category 305, and Price 306. Product ID 302 is an identifier for identifying each product. Store ID 303 is an ID of a store which has a product stored in the record. Product information is uniquely identified by specifying Product ID 302 and Store ID 303. In other words, Product ID 302 and Store ID 303 are primary keys for the product information DBs 22, 41. Product Name 304 is a character string indicative of a name given to a product. Category 305 is provided to set a character string indicative of the category of a product. Price 306 is provided to set a numerical value indicative of the price of a product.

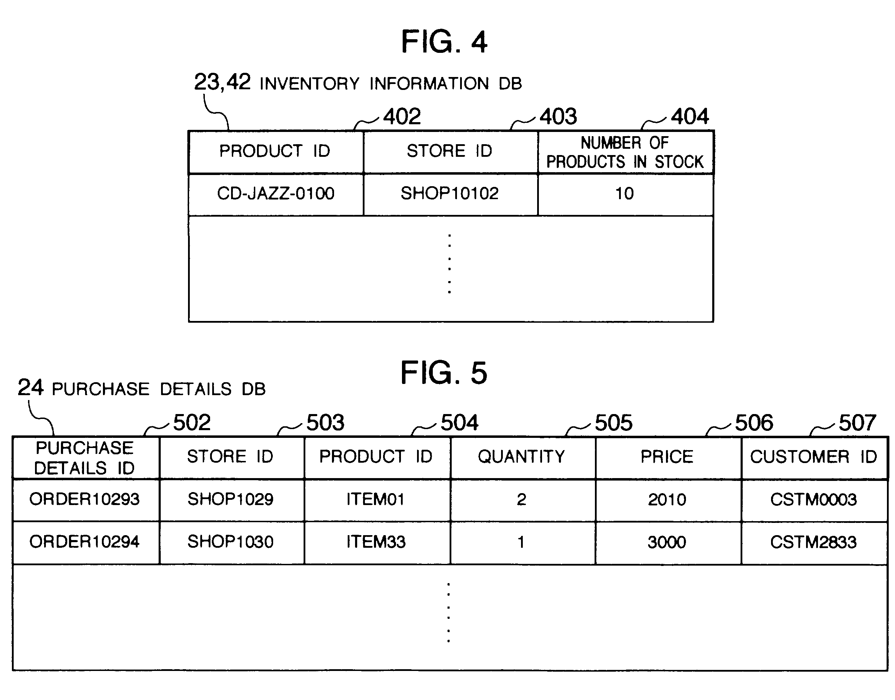

Fig. 4 shows a data structure for the inventory information DBs 23, 42. Each record of the inventory information DBs 23, 42 consists of Product ID 402, Store ID 403, and Number of Products in Stock 404. Product ID 402 is an identifier of a product which is subjected to inventory control. Store ID 403 is an identifier of a store which deals in the product. Inventory information is uniquely identified by specifying Product ID 402 and Store ID 403 for the inventory information DBs 23, 42. In other words, Product ID 402 and Store ID 403 are primary keys for the inventory information DBs 23, 42.

Fig. 5 shows a data structure for the purchase details DB 24 for managing information on products purchased by consumers. Each record of the purchase details DB 24 consists of Purchase Details ID 502, Store ID 503, Product ID 504, Quantity 505, Price 506 and Customer ID 507. Purchase Details ID 502 is an identifier for uniquely identifying purchase information. Product ID 504 is an identifier of a product which has been fixed by the user to purchase. Store ID 503 is an identifier of a store which deals in the product. Quantity 505 indicates the number of purchased products. Price 506 indicates the total amount of payment for the number of the purchased products. Customer ID 507 is an identifier of a customer who has purchased a product. Customer ID 507 may be an identifier uniquely assigned to a user on the network, or may be independently assigned to each user and managed by the electronic mall system.

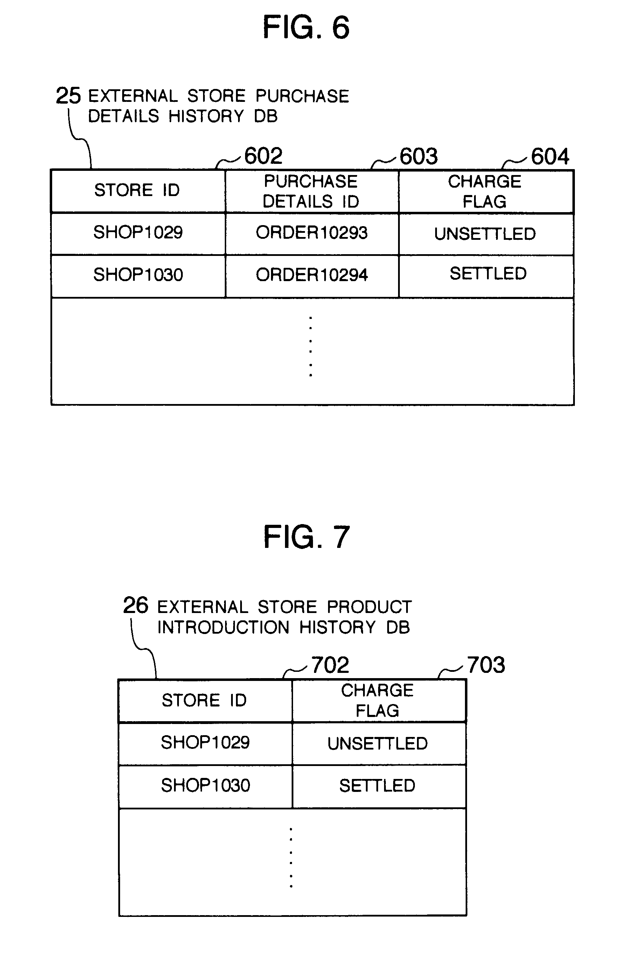

Fig. 6 shows a data structure for the external store purchase details history DB 25 for managing history information on details on products purchased in external stores. Each record of the external store purchase details history DB 25 consists of Store ID 602, Purchase Details ID 603, and Charge Flag 604. Purchase Details ID 603 is a purchase details ID for identifying details on products purchased in an external store. Store ID 602 is an identifier of a store which deals in products purchased with the purchase details. Charge Flag 604 holds information indicating whether or not a commission for purchase processing has been charged on the external store. The flag may take one of two values: "Settled" and "Unsettled". "Unsettled" indicates that the commission charging processing is unsettled, while "Settled" indicates that the processing has been settled.

Fig. 7 shows a data structure for the external store product introduction history DB 26 for managing history information on introduction of products dealt in by external stores. Each record of the external store product introduction history DB 26 consists of Store ID 702 and Charge Flag 703. Store ID 702 is an identifier of an external store which deals in products that has been introduced through the electronic mall. Charge Flag 703 holds information indicating whether or not a commission for product introduction processing has been charged on the external store. The flag may take one of two values: "Settled" and "Unsettled". "Unsettled" indicates that the commission charging processing is unsettled, while "Settled" indicates that the processing has been settled.

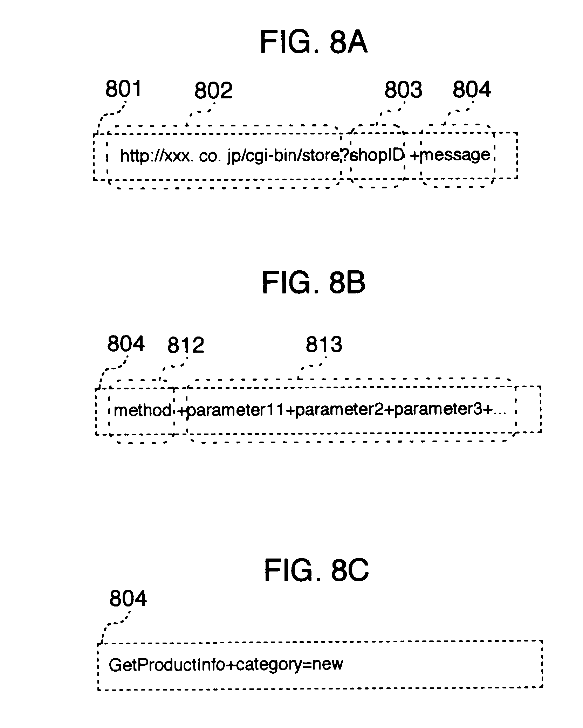

Figs. 8A - 8C show a URL format 801 for the URL which is utilized by the electronic mall 10 to communicate with an external electronic store 30. In this embodiment, the electronic store 30 is implemented as a CGI (Common Gateway Interface) program on the network from the electronic mall 10. The CGI is a common application interface for applications on the Internet. In this event, the URL format 801 comprises network address information 802 on a CGI program which implements an electronic store; a character string 803 indicative of a store ID of an electronic store 30 to which a message is transmitted; and a message character string 804 which is to be transmitted to the electronic store 30, as shown in Fig. 8A. The message character string 804 comprises a method name character string 812 and a character string indicative of a parameter list 813, as shown in Fig. 8B.

The method name character string 812 specifies the name of processing requested by the electronic mall 10 to the electronic store 30, and a list of arguments used by an associated method is specified by the parameter list 813. Characters "+" and "&" in the parameter list 813 function as delimiters. In this embodiment, methods *GetProductInfo, DecrementInventory, IncrementInventory* are provided. *GetProductInfo* is a method for requesting information on a product, and has a product search condition as a parameter. *DecrementInventory* is a method for requesting an inventory reduction, and has a product ID and the number of reduced products as parameters. *IncrementInventory* is a method for requesting an inventory increase, and has a product ID and the number of increased products as parameters.

Fig. 8C shows an example of the message character string 804. In this example, the character string 804 specifies *GetProductInfo* as a method for acquiring information on a product, and a search condition character string "category=new" as a parameter for the method. The search condition character string of this example indicates a search condition which specifies that Product Category 305 is "new." The method *GetProductInfo* corresponds to the product information search processing 31, while the methods *DecrementInventory, IncrementInventory* correspond to the inventory processing 32.

When the client 20 communicates with the electronic mall 10, a message URL having a similar format to that shown in Fig. 8A is also used. The electronic mall 10 has methods *mall, shopping, shoppingOK,* and so on. The method *mall* corresponds to the product information acquisition processing 12; the method *shopping* corresponds to the inventory processing 14; and the method *shoppingOk* corresponds to the product purchase fixation processing 15, respectively.

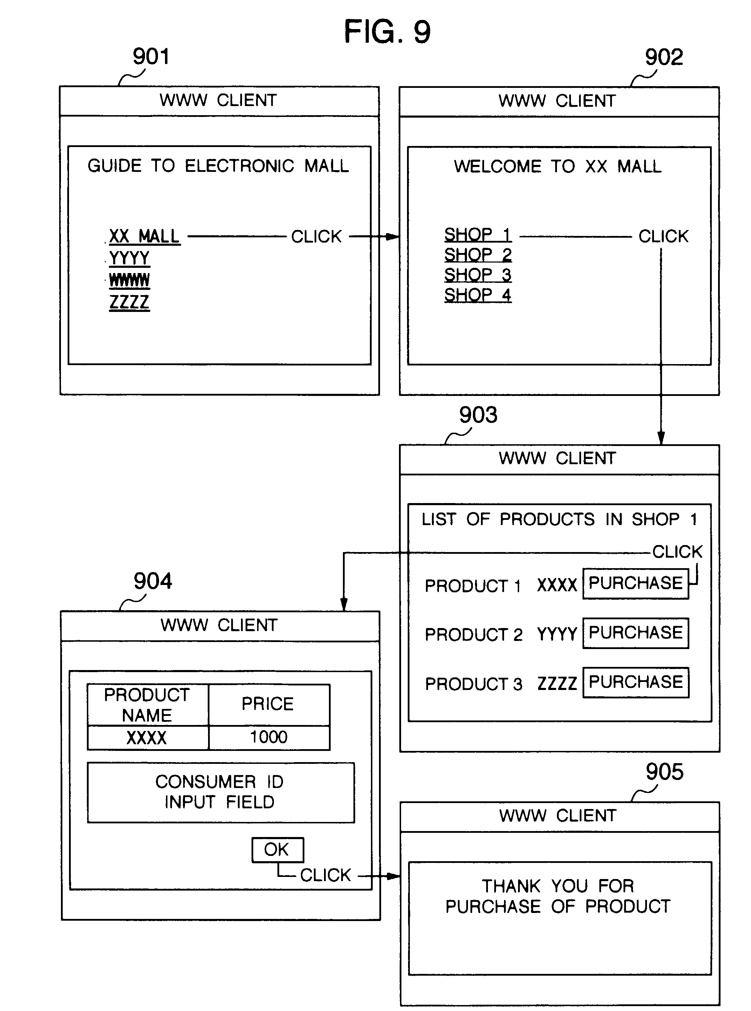

Next, specific operations in the electronic mall system of this embodiment will be described with reference to Fig. 9 which illustrates a transition of displays on the screen of the WWW client 20 when a consumer purchases a product.

### (1) Operation 1: Connection with Electronic Mall

The user of the client 20 opens a page 901 which is a guide to an electronic mall using any WWW browser.

The consumer or user selects on a screen 901 an anchor which has described therein the URL of "XX mall" that is the electronic mall 10 on the network. This URL of the "XX mall" has been previously set, where information on the URL is described as "http://xxmall.co.jp/xxmall.html". The selection of the anchor by the user causes the client 20 to be connected to the electronic mall 10, and a request for a list of stores in the XX mall is transmitted to the electronic mall 10 which is the XX mall. The electronic mall 10, in response to the request, transmits a list of stores to the client 20, and the WWW browser on the client 20 displays the received list of stores, followed by a transition to a screen 902.

### (2) Operation 2: Selection of Store

The screen 902 shows a list of stores which have been registered in the "XX mall". The screen 902 displays a list of categories of products dealt in by respective stores. A product category corresponding to each store name has URL information set therein for requesting the electronic mall 10 to generate a list of products belonging to a specified product category which is dealt in by the store. For example, URL for requesting a list of new products in Shop 1 may take the form of "http://xxmall.co.jp/cgi-bin/mall?shop1&category= new". When the consumer clicks on any of the product category or store names, corresponding information is transmitted from the electronic mall 10. As the WWW browser displays the transmitted information, the screen 902 transitions to a screen 903.

### (3) Operation 3: Display of Product List and Purchase of Product

The screen 903 displays a list of product information on a requested product category which has been registered in "Shop 1" store. Each product information on the list displays information related to a product such as the product name, quantity, price and so on, a button associated with URL which describes a request for purchasing the product, and so on. The quantity of products to be purchased is set to "1" by default, and the consumer can modify it to a required number. As the consumer clicks on a purchase button for Product 1, a product purchase request is sent to the electronic mall 10. For example, URL for ordering one of Product 1 at Shop 1, which includes parameters added thereto by the client 20, may take the form of "http://xxmall.co.jp/cgi-bin/shopping?shop1&item= item1&count=1". This operation causes a transition to a screen 904.

### (4) Operation 4: Fixation of Purchase of Product

The screen 904 displays detailed information on a product, which has been selected by the consumer for purchase, including the product name, price, quantity and so on related to the purchase, in order to request the consumer to confirm the purchase. When the consumer clicks on an "OK" button on this screen 904, a message URL for confirmation of the purchase is sent to the electronic mall 10, thus fixing the purchase of the product. For example, URL sent by clicking on the "OK" button may take the form of "http://xxmall.co.jp/cgi-bin/shoppingOK?shop1&item=item1&count=1&sum=100&customer =yamada-taro". As a response to the purchase confirmation message, a screen 905 is sent to the client 20.

Next described are the processing within the electronic mall 10 and the processing within the electronic store 30.

The store list creation processing 11 in the electronic mall 10 receives a request for a list of stores from the client 20, retrieves information on associated stores from the store information DB 21, and transmits a list of store names 204 to the client 20.

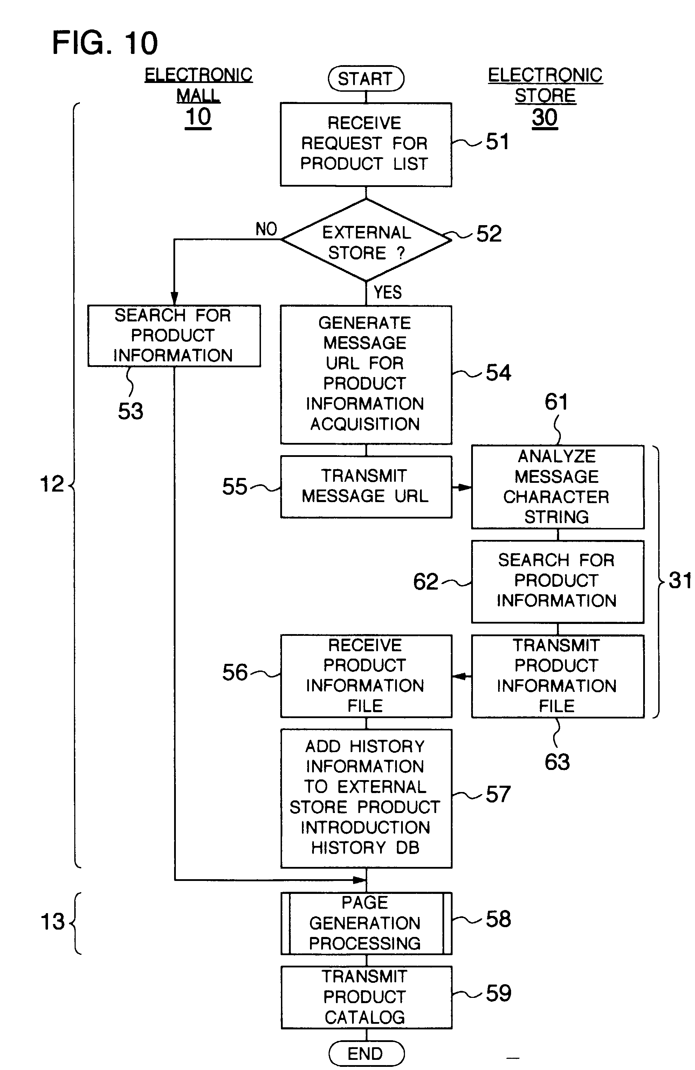

Fig. 10 is a flow chart illustrating the flow of processing steps in the product information acquisition processing 12 and the page generation processing 13 in the electronic mall 10 as well as the product information search processing 31 in the electronic store 30. When the electronic mall 10 receives a message URL including "mall" for requesting a product list from the client 20 through the network 40 and the WWW server 50 (step 51), the electronic mall 10 determines, with reference to the store information DB 21, whether or not Store Attribute 203 of a record having Store Name 204 coincident with the store name within the message indicates "External Store" (step 52). If Store Attribute 203 does not indicate an external store (NO at step 52), the electronic mall 10 searches the product information DB 22 in accordance with search keys including Store ID 303 of the store and Category 305 of products based on the message, and extracts information on products which meet the keys (step 53). Then, the processing proceeds to step 58. Conversely, if Store Attribute 203 indicates an external store (YES at step 52), the electronic mall 10 generates a message URL for acquiring the product information in accordance with the URL format 801 based on the URL 205 of the store (step 54). Specifically, in the URL format 801, Store ID 303 is set in the character string 803; *GetProductInfo* is set in the method name character string 812; and the product category, which is a search condition, is set as a parameter. Next, the electronic mall 10 transmits the generated message URL in accordance with HTTP to a target electronic store 30 (step 55). The electronic store 30 receives this message URL through the network 60 and the WWW server 70, and analyzes the message character string included therein (step 61). As a result, the control is passed to the product information search processing 31 of the electronic store 30. The product information search processing 31 searches the product information DB 41 in accordance with search keys including Store ID 303 of a store specified in the message URL and Category 305 of products based on the message, to extract information on products which meet the condition (step 62). Next, the electronic store 30 transmits a resultant product information file to the electronic mall 10 (step 63). The electronic mall 10 receives this product information file, which is a response file of the electronic store 30 for the HTTP method (step 56), creates history information indicating that information on products at the electronic store 30 has been introduced to the consumer, and adds this history information to the external store product introduction history DB 26 (step 57). Store ID 702 is the ID of the store, and Charge Flag 703 is set to "Unsettled." Next, the electronic mall 30 generates a product catalog page based on the acquired product information file (step 58), and transmits the product catalog page to the client 20 together with Store ID 702 (step 59). The page generation processing 13 generates a catalog of products which meet requirements of the consumer using known dynamic HTML techniques. It should be noted that the page generation processing at step 58 may be provided also in the electronic store 30 such that the electronic mall 10 receives a file in the form of product catalog from the electronic store 30.

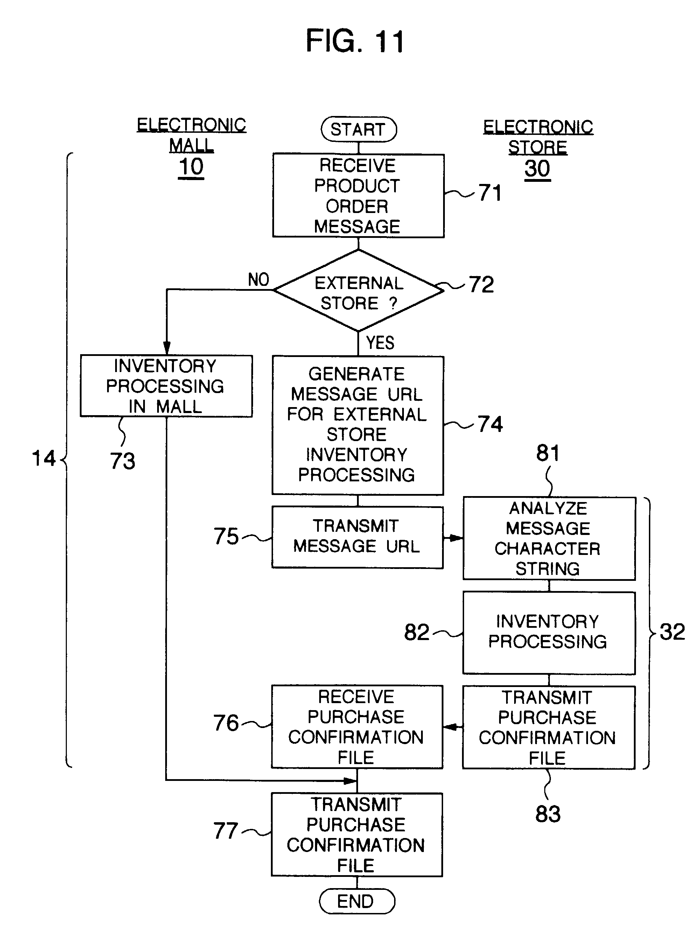

Fig. 11 is a flow chart illustrating the flow of processing steps in the inventory processing 14 in the electronic mall 10 and the inventory processing 32 in the electronic store 30. As the electronic mall 10 receives a message URL including "shopping" for an order of a product from the client 20 (step 71), the electronic mall 10 determines whether or not Store Attribute 203 corresponding to Store ID in the received message URL indicates "External Store" (step 72). If Store Attribute 203 does not indicate an external store (NO at step 72), the electronic mall 10 searches the inventory information DB 23 in accordance with search keys including Store ID 403 of the store and Product ID 402 of the product based on the message, subtracts a purchased quantity in the message from Number of Products in Stock 404 of the product (step 73), and proceeds to step 77. However, an error message is prepared if Number of Products in Stock 404 is smaller than the purchased quantity. If Number of Products in Stock 404 is larger than the purchased quantity, the electronic mall 10 creates a purchase confirmation file. Conversely, if Store Attribute 203 indicates an external store (YES at step 72), the electronic mall 10 generates a message URL for external store inventory processing in accordance with the URL format 801 based on URL 205 of the store (step 74). Specifically, Store ID 403 is set in the character string 803; *DecrementInventory* is set in the method name character string 812; and the purchased quantity is set as a parameter. Next, the electronic mall 10 transmits the generated message URL in accordance with HTTP to a target electronic store 30 (step 75). The electronic store 30 receives this message URL, and analyzes the character string included in this message (step 81). As a result, the control is passed to the inventory processing 32. The inventory processing 32 searches the inventory information DB 42 in accordance with search keys including Store ID 403 of a store specified in the message URL and Product ID 402 of the product based on the message, subtracts the purchased quantity in the message from Number of Product in Stock 404 of the product (step 82), and creates a purchase confirmation file. However, if Number of Products in Stock 404 is smaller than the purchased quantity, an error message is prepared. Next, the electronic store 30 transmits the created purchase confirmation file or the error message to the electronic mall 10 (step 83). The electronic mall 10 receives the purchase confirmation file or the error message (step 76), and retransmits it to the client 20 (step 77).

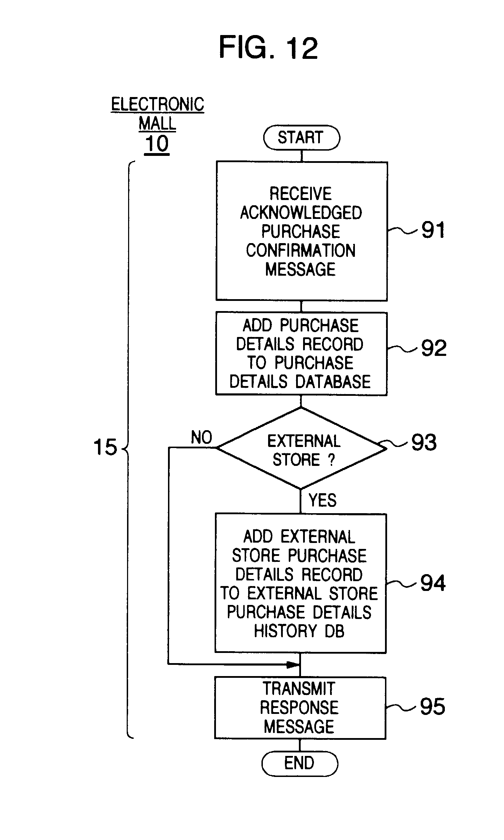

Fig. 12 is a flow chart illustrating the flow of processing steps in the product purchase fixation processing 15 in the electronic mall 10. When the electronic mall 10 receives a message URL including "shoppingOK" indicative of acknowledged purchase confirmation from the client 20 (step 91), the electronic mall 10 creates a purchase details record based on a store ID, a product ID, a purchased quantity, a customer ID and a paid amount in the message, and adds the created purchase details record to the purchase details DB 24 (step 92). Then, the electronic mall 10 generates an order number as Purchase Details ID 502. The electronic mall 10 next determines whether or not Store Attribute 203 corresponding to the store ID in the received message indicates "External Store" (step 93). If Store Attribute 203 does not indicate an external store (NO at step 93), the processing proceeds to step 95. Conversely, if Store Attribute 203 indicates an external store (YES at step 93), the electronic mall 10 creates an external store purchase details record, and adds this record to the external store purchase details history DB 25 (step 94). Purchase Details ID 603 is identical to Purchase Details ID 502 in the created purchase details record. Charge Flag 604 is set to "Unsettled". Finally, the electronic mall 10 transmits a response message page to the client 20 (step 95). If the electronic mall 10 receives a message notifying a cancel to the purchase from the client 20, the electronic mall 10 returns Number of Products in Stock 404 in the inventory information DB 23 or in the inventory information DB 42 to the previous value through the inventory processing 14 and the inventory processing 32 in Fig. 11. For updating the inventory information DB 42, the electronic mall 10 issues a message URL including *IncrementInventory* method to the electronic store 30.

Next described is the external store charge processing 16 in the electronic mall 10. The charge processing 16 searches the external store product introduction history DB 26 and the external store purchase details history DB 25 for records which have Charge Flags 604, 703 set to "Unsettled", and totalizes the number of times of introductions and the number of times of purchase for each store to calculate a product introduction fee and a purchase commission for each external store. Then, as the calculation for the commission is completed, "Settled" is set in Charge Flags 604, 703 in associated records in the external store product introduction DB 26 and the external store purchase details history DB 25. Afterwards, the charge processing 16 may issue a bill to the external store 30 through the network 60. In addition, a payment to the bill may be received in the form of electronic money through the network 60, wherein the charge processing 16 may manage payments to bills through electronic money. This charge processing 16 may be executed at predetermined intervals, for example, once a week, once a month, or the like.

While in the foregoing embodiment, all clients 20 accessing to the electronic mall 10 are authorized to purchase products, some limitations may be placed on the authorization to the purchase. Specifically, the electronic mall 10 may store users having authorization to accesses to the electronic mall 10 and purchase of products in the electronic mall 10 as customer DB. The electronic mall 10, when accessed by a user, requests the user to input a customer ID and a password. Subsequent processing is executed only when the inputted customer ID and password match information stored in the customer DB.

While the foregoing embodiment has been described for a particular case where the Internet is employed as the network and the used protocol is HTTP, a similar system can be realized with any other network and protocol.

It should be understood that since items and primary keys in the databases vary depending on managed items and management methods, these details are not limited to those described in the foregoing embodiment.

## Claims

1. An electronic mall system comprising:
an electronic mall server (10);
a client (20);
an electronic store (30); and
a network (40, 60) for connecting said electronic mall server, said client, and said electronic store, wherein:
said electronic mall server has a store information database (21, 22) for storing information on products of internal stores belonging to an electronic mall, and information on addresses of external stores which do not belong to said electronic mall; and
said electronic mall server, upon receiving a request for information on a product in a store or a request for purchase of a product in a store from said client, determines whether nor not said store is an internal store or an external store based on the store information database, and when the store is an external store, said electronic mall server requests an electronic store corresponding to said external store to collect information on associated products or to execute product purchase processing (12, 14).

2. An electronic mall system according to claim 1, wherein:
when said electronic mall server requests said electronic store corresponding to said external store to collect information on associated products or to execute the product purchase processing, said electronic mall server stores history related to said external store in a database (25, 26).

3. An electronic mall system according to claim 1, wherein:
said network is the Internet, the address information on an external store is Uniform Resource Locator (URL), and when said electronic mall server requests said electronic store corresponding to said external store to collect information on products of said electronic store or to execute the product purchase processing, said electronic mall server creates a message URL by adding a store identifier, the contents of the request and parameters to URL of said electronic store.

4. A method of providing information on products or executing a product purchase transaction in an electronic mall system, comprising the steps of:
(a) in an electronic mall server (10):
storing information on products of internal stores belonging to an electronic mall, and information on addresses of external stores which do not belong to said electronic mall;
receiving a request for information on products of a store or a request for purchase of a product from a client (20) through a network (40, 60);
determining whether said store is an internal store or an external store;
when said store is an internal store, collecting information on products of said store, or executing product purchase processing, and transmitting a result to said client through the network; and
when said store is an external store, requesting an electronic store corresponding to said external store to collect information on products of said store or to execute product purchase processing through the network, and transmitting product information or a product purchase processing result received through the network from said external store to said client, and
(b) in an electronic store (30):
receiving a request for collecting information on products of said electronic store itself or a request for product purchase processing from said electronic mall server through the network; and
collecting information on products of said electronic store itself or executing the product purchase processing, and transmitting a result to said electronic mall server through the network.

5. In an electronic mall server (10), a method of providing information on products or executing a product purchase transaction, comprising the steps of:
storing information on products of internal stores belonging to an electronic mall, and information on addresses of external stores which do not belong to the electronic mall;
receiving a request for information on products of a store or a request for purchase of a product from a client (20) through a network (40, 60);
determining whether said store is an internal store or an external store;
when said store is an internal store, collecting information on products of said store, or executing product purchase processing, and transmitting a result to said client through the network; and
when said store is an external store, requesting an electronic store (30) corresponding to said external store to collect information on products of said store or to execute product purchase processing through the network, and transmitting product information or a product purchase processing result received through the network from said external store to said client.

6. A method in an electronic mall server according to claim 5, further comprising the step of:
when said electronic mall server requests said electronic store corresponding to said external store to collect information on associated products or to execute the product purchase processing, storing history related to said external store in a database (25, 26).

7. A method in an electronic mall server according to claim 5, wherein:
said network is the Internet, the address information on an external store is Uniform Resource Locator (URL), and when said electronic mall server requests said electronic store corresponding to said external store to collect information on its product or to execute the product purchase processing, said electronic mall server creates a message URL by adding a store identifier, the contents of the request and parameters to URL of said electronic store.

8. A method of providing information on products or executing product purchase processing in an electronic store (30) of an electronic mall system, comprising the steps of:
receiving a request for collecting information on products of said electronic store itself or a request for product purchase processing from an electronic mall server (10) through a network (40, 60); and
collecting information on products of said electronic store itself or executing the product purchase processing, and transmitting a result to said electronic mall server through the network.

9. A program storage device readable by a machine, tangibly embodying a program of instructions executable by the machine to perform method steps for providing information on products or for executing a product purchase transaction, said method steps comprising:
storing information on products of internal stores belonging to an electronic mall, and information on addresses of external stores which do not belong to said electronic mall;
receiving a request for information on products of a store or a request for purchase of a product from a client (20) through a network (40, 60);
determining whether said store is an internal store or an external store;
when said store is an internal store, collecting information on products of said store, or executing product purchase processing, and transmitting a result to said client through the network; and
when said store is an external store, requesting an electronic store corresponding to said external store to collect information on products of said store or to execute product purchase processing through the network, and transmitting product information or a product purchase processing result received through the network from said external store to said client.

10. A program storage device readable by a machine, tangibly embodying a program of instructions executable by the machine to perform method steps for providing information on products or for executing a product purchase transaction, said method steps comprising:
receiving a request for collecting information on products of an electronic store (30) itself or a request for product purchase processing from said electronic mall server (10) through a network (40, 60); and
collecting information on products of said electronic store itself or executing the product purchase processing, and transmitting a result to said electronic mall server through the network.
